Europäisches Patentamt

European Patent Office

Office européen des brevets

(19)

(11) Veröffentlichungsnummer: **0 319 674**
**A1**

## (12) EUROPÄISCHE PATENTANMELDUNG

(21) Anmeldenummer: 88116933.8

(22) Anmeldetag: 12.10.88

(51) Int. Cl.⁴: **B23Q 7/14 , B65G 47/26**

(30) Priorität: 06.11.87 DE 3737811

(43) Veröffentlichungstag der Anmeldung:
14.06.89 Patentblatt 89/24

(84) Benannte Vertragsstaaten:
**AT BE CH DE FR GB IT LI LU NL SE**

(71) Anmelder: **Siemens Aktiengesellschaft Berlin
und München
Wittelsbacherplatz 2
D-8000 München 2(DE)**

(72) Erfinder: **Schliesche, Reiner
Grünauer Allee 31
D-8025 Unterhaching(DE)**

(54) **Handhabungssystem für Werkstückträger.**

(57) Die Erfindung offenbart ein Handhabungssystem für Werkstückträger (5), daß aus einem Zentriersystem und einem Vereinzelungssystem besteht. Das Zusammenwirken dieser beiden Systeme ermöglicht zum einen eine bisher nicht mögliche exakte und reproduzierbare Fixierung von durch Transportbänder (6) bewegbare Werkstückträger (5) an einem bestimmten Ort innerhalb verschiedener Montageeinheiten und zum anderen einen Schutz des momentan arretierten Werkstückträgers vor Stößen von nachfolgenden Werkstückträgern, die auf den arretierten Werkstückträger auffahren. Das Zentriersystem besteht aus mehreren in die Bewegungsrichtung der Werkstückträger einschwenkbaren Hebeln (1;2;3) und einem Festanschlag (4), wobei diese Elemente mit am Werkstückträger (5) befindlichen Bolzen (9) zusammenwirken.

EP 0 319 674 A1

## FIG 1

## Handhabungssystem für Werkstückträger

Die Erfindung betrifft ein Handhabungssystem für Werkstückträger, bestehend aus einem Zentriersystem und einem Vereinzelungssystem, insbesondere für den Einsatz an Modulen an einem Montageliniensystem.

Innerhalb von Montageliniensystemen, die in verschiedene Montage-, Zuführ-, Ausschleus- oder Umlenkeinheiten unterteilt werden sind Werkstückträger eingesetzt, die von Einheit zu Einheit transportiert werden und an der momentanen Station festgehalten werden, damit auf ihnen Montagearbeiten oder Prüfarbeiten durchgeführt werden können. Hierzu ist es nicht nur nötig, die entsprechenden Werkträger anzuhalten, sondern sie auch genau an einer bestimmten reproduzierbaren Stelle zu arretieren. Dies ist die Voraussetzung dazu, daß beispielsweise Handhabungsgeräte, Roboter oder Bestückköpfe, Montagearbeiten auf den arretierten Werkstückträgern präzise vornehmen können. Bisher bekannte Montageeinheiten, die mit beweglichen Werkstückträgern arbeiten, weisen keine zufriedenstellende Zentriervorrichtung auf, die die Werkstückträger innerhalb der Montageeinheiten zuverlässig an einem reproduzierbaren Platz arretiert und eine Beeinflussung durch Stöße von nachfolgenden, auffahrenden Werkstückträgern verhindert.

Der Erfindung liegt die Aufgabe zugrunde, ein Handhabungssystem für Werkstückträger bereitzustellen, das mittels eines Zentriersystemes und eines Vereinzelungssystemes für eine hochgenaue Positionierung und Arretierung der Werkstückträger unter Ausschaltung negativer Einflüsse von nachfolgenden Werkstückträgern sorgt.

Die Lösung dieser Aufgabe wird durch den kennzeichnenden Teil des Anspruches 1 wiedergegeben.

Der Erfindung liegt die Erkenntnis zugrunde, daß innerhalb von Montageeinheiten zur präzisen und an einem bestimmten reproduzierbaren Ort vorzunehmenden Arretierung von auf Transportbänder bewegbaren Werkstückträgern durch den Einsatz von quer zur Bewegungsrichtung des Werkstückträgers einfahrbaren Hebeln, einem Festanschlag und von im Werkstückträger befindlichen Bolzen verwirklicht wird. Die Hebel sind in Kombination mit dem Festanschlag und mit den Bolzen derart ausgebildet, daß bezogen auf einen gedachten Anschlag in jeder Koordinatenrichtung der zu arretierende Werkstückträger immer am gleichen Ort positioniert wird. Um den arretierten Werkstückträger während der Arretierung nicht durch Auffahren von nachfolgenden Werkstückträgern zu beeinträchtigen, wird zugleich durch ein Vereinzelungssystem ein Festhalten von nachfolgenden Werkzeugträgern vor dem arretierten Werkzeugträger ermöglicht.

Weitere Ausgestaltungen der Erfindung sind den Ansprüchen 2 bis 7 zu entnehmen.

Im folgenden wird ein Ausführungsbeispiel anhand der schematischen Figuren gegeben.

Fig. 1 zeigt einen im Zentriersystem befindlichen arretierten Werkstückträger 5 in der Draufsicht.

Fig. 2 zeigt den Werkstückträger 5 im Zentriersystem in der teilweise geschnittenen Darstellung, im Schnitt A/A aus der Fig. 1.

Fig. 3 zeigt den Schnitt B/B aus der Fig. 1.

Fig. 4 zeigt das Vereinzelungssystem in der Draufsicht mit zwei angedeuteten Werkstückträgern 5.

Fig. 5 zeigt das Vereinzelungssystem in der Seitenansicht mit den Hebeln 1;2;3;20;21.

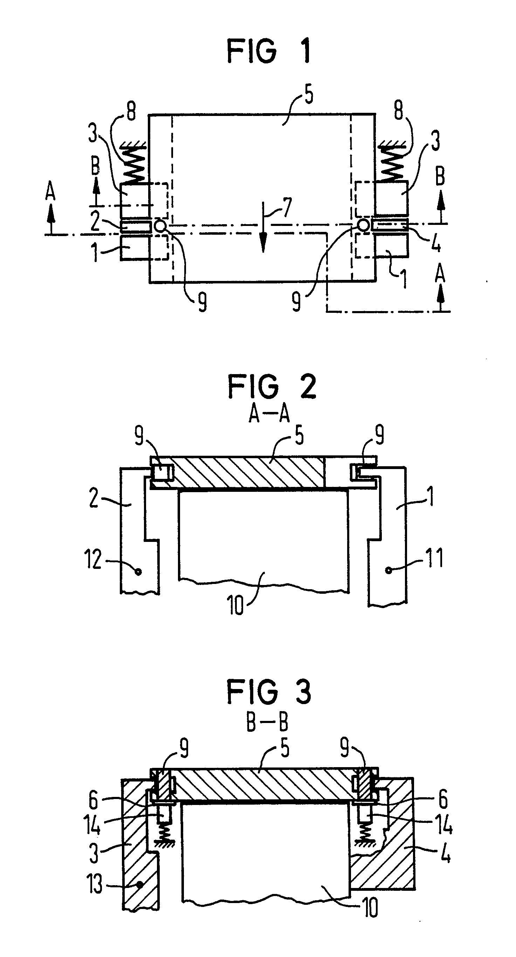

In der Fig. 1 ist ein Werkstückträger 5 durch die eingeschwenkten Hebel 1 mittels der im Werkzeugträger 5 befindlichen Bolzen 9 gestoppt worden, über den Hebel 2 und die Bolzen 9 an den Festanschlag 4 gedrückt worden und mittels der Hebel 3 und der Federn 8 zum einen durch hinunterdrücken auf eine Auflage und zum anderen durch seitliches Andrücken an die Hebel 1 präzise und reproduzierbar fixiert worden. Die Anordnung der verschiedenen beschriebenen Elemente in Bezug auf die Bewegungsrichtung 7 des Werkstückträgers 5 ist der Zeichnung zu entnehmen.

Die Fig. 2 zeigt den Schnitt A/A aus der Fig. 1. Hierbei ist zu erkennen, daß der Hebel 1 um eine Achse 11 und der Hebel 2 um eine Achse 12 drehbar sind, der Werkzeugträger im Schnitt eine zumindest seitlich verlaufende Nut aufweist, in der auf jeder Seite jeweils ein Bolzen 9 sitzt. Die Bolzen 9 sitzen symmetrisch an der gleichen Stelle, bezogen auf die Länge des Werkstückträgers 5. Um das Zusammenwirken von Zentriersystem und Vereinzelungssystem zu optimieren, sind die Bolzen 9 im vorderen Drittel des Werkstückträgers 5 angebracht. In dem Schnitt A/A ist zum einen zu erkennen, daß der Hebel 2 von außen an den ihm zugewandten linken Bolzen 9 angreift und der rechte Bolzen 9 seitlich an den Hebel 1 drückt.

In der Fig. 3 ist der Schnitt B/B aus der Fig. 1 dargestellt. Hier werden die Transportbänder 6 sichtbar, die über federunterstützte Rollen 14 nach oben gedrückt werden und so nicht arretierte oder durch das Vereinzelungssystem festgehaltene Werkstückträger 5 bewegen. Während der Arretierung eines Werkstückträgers 5 schleifen die ständig laufenden Transportbänder 6 unter der Andruckkraft der federunterstützten Rollen 14 unter den Werkzeugträgern 5. Der Hebel 3, der auf der Achse 13 nicht nur drehbar sondern auch axial verschiebbar gelagert ist, ist für die Drehbewegung so ausgebildet, daß er paarig angeordnet den Werkstückträger 5 beim Einfahren, bzw. beim Einschwenken des Hebels in die beiderseits angeordneten Nuten innerhalb des Werkstückträgers 5 diesen nach unten auf eine Auflage 10 drückt.

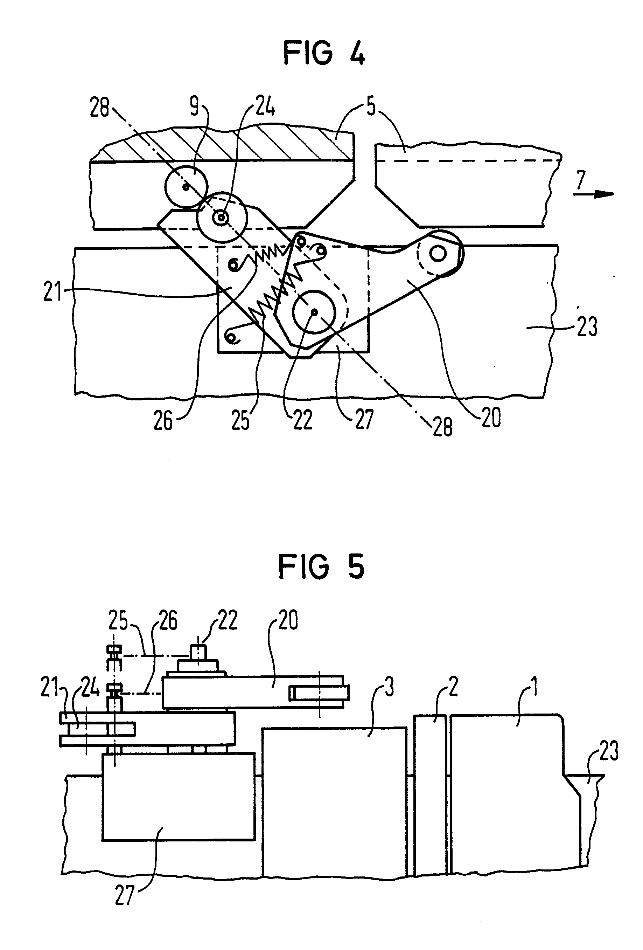

In der Fig. 4 ist das dem Zentriersystem vorgeschaltete Vereinzelungssystem dargestellt. Dabei ist durch den in Bewegungsrichtung 7 vorneliegenden Werkstückträger 5 der Hebel 20 in Arbeitsposition gebracht worden, wobei die Feder 25, die am Hebel 20 und am Stativ 27 befestigt ist, gespannt wurde und zugleich der Hebel 21 über die Feder 26, die am Hebel 21 und am Hebel 20 befestigt ist, in die Bewegungsrichtung des Bolzens 9 hineingeschwenkt wurden. Der in Bewegungsrichtung hintenliegende Werkstückträger 5 kommt durch das Anstoßen des Bolzens 9 an die Lagerung 24, auf der sich eine Rolle befindet, so zum Stehen, daß er nicht auf den in Bewegungsrichtung vorne liegenden Werkstückträger 5 auffährt. Der Hebel 21 befindet sich in dieser Arbeitsstellung an einem Anschlag innerhalb des Statives 27. Die Konstruktion ist so ausgelegt, daß der Mittelpunkt des Bolzens 9 vor Überschreiten der Achse 28, die durch die Lagerungen 24 und 22 festgelegt ist, zum Stehen kommt. Dadurch ist der Hebel 21 selbstgängig geklemmt. Die Kraft die der Bolzen 9 beim Anfahren an die Lagerung 24 auf den Hebel 21 überträgt führt nicht zu einem gegen die Kraft der Feder 26 gerichteten Ausweichen des Hebels 21. Ein weiteres Konstruktionsmerkmal für die beschriebene Abhängigkeit ist die Lage der resultierenden Kraft, die im Mittelpunkt des Bolzens 9 ansetzt. Die Konstruktion ist so ausgeführt, daß die besagte resultierende Kraft in der Fig. 4 oberhalb der Lagerung 22 vorbeiführt. Nach Freigabe und Wegfahren des vorderen Werkstückträgers 5 kehrt der Hebel 20 in seine Ruhelage zurück. Dadurch werden die Federn 25 und 26 teilweise entspannt und der Hebel 21 gibt den hinteren Werkstückträger 5 frei, so daß der beschriebene Vorgang erneut abläuft. Der Winkelbereich, in dem der Hebel 20 und der Hebel 21 bewegbar sind liegt etwa zwischen 5 und 30°. Der Anschlag des Hebels 21, der in dessen Ruhelage angreift arretiert den Hebel 21 so, daß Werkstückträger 5, die weiter transportiert werden sollen nicht mit ihren Bolzen 9 an die Rolle stoßen, die auf der Lagerung 24 befestigt ist.

In der Fig. 5 wird das Vereinzelungssystem in der Seitenansicht dargestellt. Hier ist das Zusammenwirken der Hebel 1;2;3 mit dem Vereinzelungssystem, bestehend aus den Hebeln 20 und 21 sowie den Federn 25, 26 und den Lagerungen 22, 24 gut zu erkennen. Die Stative 23 und 27 sind so miteinander verbunden, daß die Bolzen 9, hier nicht sichtbar, hinter dem Hebel 2 zum Stillstand kommen, das Vereinzelungssystem durch einen Werkstückträger 5 durch Andrücken des Hebels 20 in Arbeitsposition gebracht wurde und nachfolgende Werkstückträger 5 in einem ausreichenden Abstand ebenfalls gestoppt werden.

## Ansprüche

1. Handhabungssystem für Werkstückträger (5), bestehend aus einem Zentriersystem und einem Vereinzelungssystem, insbesondere für den Einsatz an Modulen in einem Montageliniensystem, **dadurch gekennzeichnet,** daß

a) der auf Transportbändern (6) bewegbare Werkstückträger (5) im Zentriersystem durch quer zu dessen Bewegungsrichtung (7) einfahrbare Hebel (1;2;3), einen Festanschlag (4) und am Werkzeugträger (5) befindliche Bolzen (9) angehalten wird und anschließend in allen drei Raumrichtungen wiederholgenau arretierbar ist,

b) der arretierte Werkstückträger (5) vor dem Auffahren von nachfolgenden Werkstückträgern (5) dadurch geschützt wird, daß von einem Vereinzelungssystem, daß durch den arretierten Werkstückträger (5) über einen Hebel (20) in Arbeitsstellung gebracht ist, nachfolgende Werkstückträger (5) mittels eines in die Bewegungsrichtung der Bolzen (9) vor diesen eingeschwenkten Hebelarmes (21) durch selbstgängige Einklemmung des Hebels (21) vor dem arretierten Werkstückträger (5) positionierbar sind.

2. Handhabungssystem anch Anspruch 1, **dadurch gekennzeichnet,** daß das Zusammenwirken der Hebel (1;2;3) mit dem Festanschlag und den Bolzen (9) derart gestaltet ist, daß der zu arretierende Werkstückträger (5) durch die auf Achsen (11) drehbar gelagerten Hebel (1) positionierbar ist, durch den auf der Achse (12) drehbar gelagerten Hebel (2) über die Bolzen (9) an den Festanschlag (4) andrückbar ist und durch die auf Achsen (13) drehbar und axial verschiebbar gelagerten Hebel (3) mittels der Federn (8) über die Bolzen (9) an die Hebel (1) andrückbar ist und zugleich auf einer Auflage (10) arretierbar ist.

3. Handhabungssystem nach einem der vorhergehenden Ansprüche, **dadurch gekennzeichnet,** daß die Transportbänder (6) mittels federunterstützter Rollen (14) nachgiebig an die Werkstückträger (5) andrückbar sind.

4. Handhabungssystem nach einem der vorhergehenden Ansprüche,
**dadurch gekennzeichnet,**
daß die Hebel (20;21) über eine Feder (26) miteinander elastisch verbunden sind, der Hebel (20) über eine am Stativ (27) befestigte Feder in seine Ruhelage rückholbar ist und seine Arbeitslage durch Einfahren eines Werkzeugträgers (5) erreichbar ist.

5. Handhabungssystem nach einem der vorhergehenden Ansprüche,
**dadurch gekennzeichnet,**
daß der Mittelpunkt des am Vereinzelungssystem angreifenden Bolzen (9) in Bewegungsrichtung (7) betrachtet vor der Verlängerung der durch die Lagerungen (22;24) gebildeten Achse (28) positionierbar ist.

6. Handhabungssystem nach einem der vorhergehenden Ansprüche,
**dadurch gekennzeichnet,**
daß der Hebel (21) sowohl in Arbeitsstellung, als auch in Ruhestellung über einen Anschlag am Stativ (27) fixierbar ist.

7. Handhabungssystem nach einem der vorhergehenden Ansprüche,
**dadurch gekennzeichnet,**
daß der Hebel (20) über einen Anschlag in seiner Ruhestellung am Hebel (21) arretierbar ist.

# FIG 1

# FIG 2
A—A

# FIG 3
B—B

EP 0 319 674 A1

## FIG 4

## FIG 5

Europäisches
Patentamt

**EUROPÄISCHER RECHERCHENBERICHT**

Nummer der Anmeldung

EP 88 11 6933

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 183 117 (MONTECH)<br>* Seiten 18-23; Figuren *<br>--- | 1-3 | B 23 Q    7/14<br>B 65 G   47/26 |
| A | FR-A-2 543 468 (LA TELEMECANIQUE ELECTRIQUE)<br>* Seiten 3-9; Figuren *<br>--- | 1,2 | |
| A | US-A-4 443 927 (COLONIUS et al.)<br>* Spalten 4,5; Figuren 6-16 *<br>--- | 1,2 | |
| A | US-A-4 095 687 (SHOIKET)<br>* Spalten 2-5; Figuren *<br>--- | 1,2 | |
| A | FR-A-2 564 809 (GALLET)<br>* Seiten 2,3; Figuren *<br>--- | 1 | |
| A | US-A-1 557 765 (NICHOLAS)<br>* Seite 2; Figuren 5,6 *<br>--- | 1,4 | |
| A | SOVIET INVENTIONS ILLUSTRATED, Woche 31, Klasse Q35, 2. März 1983, Sektionen "General/Mechanical", "Accession"- NR. A8946K/03, Derwent Publications Ltd, London, GB; & SU-A-908 675 (MOSC AUTOM LINES) 05-03-1982<br>* Figuren *<br>--- | 1,4,6,7 | RECHERCHIERTE SACHGEBIETE (Int. Cl.4)<br><br>B 23 P<br>B 23 Q<br>B 62 D<br>B 65 G<br>H 05 K |
| A | FR-A-2 486 040 (DURAND)<br>----- | | |

Der vorliegende Recherchenbericht wurde für alle Patentansprüche erstellt

| Recherchenort | Abschlußdatum der Recherche | Prüfer |
|---|---|---|
| DEN HAAG | 13-02-1989 | ROSENBAUM H.F.J. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...........................................................
& : Mitglied der gleichen Patentfamilie, übereinstimmendes
    Dokument

EPO FORM 1503 03.82 (P0403)